(19) **Europäisches Patentamt**
**European Patent Office**
**Office européen des brevets**

(11) **EP 4 250 234 A1**

(12) **EUROPEAN PATENT APPLICATION**

(43) Date of publication:
**27.09.2023 Bulletin 2023/39**

(21) Application number: **22305366.1**

(22) Date of filing: **25.03.2022**

(51) International Patent Classification (IPC):
**G06T 9/00** $^{(2006.01)}$ **H04N 19/597** $^{(2014.01)}$

(52) Cooperative Patent Classification (CPC):
**G06T 9/001; G06T 9/004; H04N 19/597**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100000 (CN)**

(72) Inventors:
- **LASSERRE, Sebastien**
  **35235 THORIGNE-FOUILLARD (FR)**
- **TAQUET, Jonathan**
  **35160 TALENSAC (FR)**

(74) Representative: **RVDB Rennes**
**44 rue Lariboisière**
**35235 Thorigné-Fouillard (FR)**

(54) **ENCODING/DECODING POSITIONS OF POINTS OF A POINT CLOUD EMCOMPASSED IN A CUBOID VOLUME**

(57)   There is provided methods and apparatus of encoding/decoding positions of points of a point cloud encompassed in a cuboid volume, said positions being represented in a three dimensional coordinate system, at least two vertices being located on edges of the cuboid volume. The encoding method comprises:
- encoding (110) vertex information defining the at least two vertices into the bitstream;
- determining (120) a point (C) in the cuboid volume from the at least two vertices; and
- constructing at least one triangle (130) from the at least two vertices and the determined point (C);
- positions of rendered points obtained by ray tracing applied on the at least one triangle representing the positions of the points of the point cloud encompassed in the cuboid volume.

**Fig. 5**

**Description**

FIELD

The present application generally relates to point cloud compression and, in particular to methods and apparatus of encoding/decoding positions of points of a point cloud encompassed in a cuboid volume.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

As a format for the representation of 3D data, point clouds have recently gained traction as they are versatile in their capability in representing all types of physical objects or scenes. Point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such point clouds are typically static, colored and huge.

Another use case is in topography and cartography in which using 3D representations allow for maps that are not limited to the plane and may include the relief. Google Maps is now a good example of 3D maps but uses meshes instead of point clouds. Nevertheless, point clouds may be a suitable data format for 3D maps and such point clouds are typically static, colored and huge.

Virtual Reality (VR), Augmented Reality (AR) and immersive worlds have recently become a hot topic and are foreseen by many as the future of 2D flat video. The basic idea is to immerse the viewer in a surrounding environment, in contrast to a standard TV that only allows the viewer to look at the virtual world in front of him/her. There are several gradations in the immersivity depending on the freedom of the viewer in the environment. A point cloud is a good format candidate for distributing VR/AR worlds.

The automotive industry, and more particularly foreseen autonomous cars, are also domains in which point clouds may be intensively used. Autonomous cars should be able to "probe" their environment to make good driving decisions based on the detected presence and nature of their immediate nearby objects and road configuration.

A point cloud is a set of points located in a three-dimensional (3D) space, optionally with additional values attached to each of the points. These additional values are usually called attributes. Attributes may be, for example, three-component colors, material properties like reflectance and/or two-component normal vectors to a surface associated with a point.

A point cloud is thus a combination of geometry data (locations of the points in a 3D space usually represented by 3D cartesian coordinates x, y and z) and attributes.

Point clouds may be sensed by various types of devices like an array of cameras, depth sensors, lasers (light detection and ranging, also known as Lidars), radars, or may be computer-generated (for example in movie post-production). Depending on the use cases, points clouds may have from thousands to up to billions of points for cartography applications. Raw representations of point clouds require a very high number of bits per point, with at least a dozen of bits per cartesian coordinate x, y or z, and optionally more bits for the attribute(s), for instance three times 10 bits for the colors.

It is important in many applications to be able to either distribute point clouds to an end-user or store them in a server by consuming only a reasonable amount of bitrate or storage space, while maintaining an acceptable (or preferably very good) quality of experience. Efficient compression of these point clouds is a key point in order to make the distribution chain of many immersive worlds practical.

Compression may be lossy (like in video compression) for the distribution to and visualization by an end-user, for example on AR/VR glasses or any other 3D-capable device. Other use cases do require lossless compression, like medical applications or autonomous driving, to avoid altering the results of a decision obtained from the subsequent analysis of the compressed and transmitted point cloud.

Until recently, point cloud compression (aka PCC) was not addressed by the mass market and no standardized point cloud codec was available. In 2017, the standardization working group ISO/JCT1/SC29/WG11, aka Moving Picture Experts Group or MPEG, has initiated work items on point cloud compression. This has led to two standards, namely

• MPEG-I part 5 (ISO/IEC 23090-5) or Video-based Point Cloud Compression (aka V-PCC)

• MPEG-I part 9 (ISO/IEC 23090-9) or Geometry-based Point Cloud Compression (aka G-PCC)

The V-PCC coding method compresses a point cloud by performing multiple projections of a 3D object to obtain 2D patches that are packed into an image (or a video when dealing with dynamic point clouds). Obtained images or videos are then compressed using already existing image/video codecs, allowing for the leverage of already deployed image and video solutions. By its very nature, V-PCC is efficient only on dense and continuous point clouds because image/video codecs are unable to compress non-smooth patches as would be obtained from the projection of, for example, Lidar-sensed sparse geometry data.

The G-PCC coding method has two schemes for the compression of a sensed sparse geometry data.

The first scheme is based on an occupancy tree, being locally any type of tree among octree, quadtree or binary tree, representing the point cloud geometry. Occupied nodes (i.e. a node associated with a cuboid volume comprising at least one point of the point cloud) are split down until a certain size is reached, and occupied leaf nodes provide the 3D locations of points, for example at the center of these nodes. The occupancy information is carried by occupancy data (binary data, flag) signaling the occupancy status of each of the child nodes of nodes. By using neighbor-based prediction techniques, high level of compression of the occupancy data can be obtained for dense point clouds. Sparse point clouds are also addressed by directly coding the position of point within a node with non-minimal size, by stopping the tree construction when only isolated points are present in a node; this technique is known as Direct Coding Mode (DCM).

The second scheme is based on a predictive tree in which each node represents the 3D location of one point and the parent/child relation between nodes represents spatial prediction from parent to children. This method can only address sparse point clouds and offers the advantage of lower latency and simpler decoding than the occupancy tree. However, compression performance is only marginally better, and the encoding is complex, relatively to the first occupancy-based method, because the encoder must intensively look for the best predictor (among a long list of potential predictors) when constructing the predictive tree.

In both schemes, attribute (de)coding is performed after complete geometry (de)coding, leading practically to a two-pass (de)coding. Thus, the joint geometry/attribute low latency is obtained by using slices that decompose the 3D space into sub-volumes that are coded independently, without prediction between the sub-volumes. This may heavily impact the compression performance when many slices are used.

An important use case is the transmission of dynamic AR/VR point clouds. Dynamic means that the point cloud evolves with respect to time. Also, AR/VR point clouds are typically locally 2D as they most of time represent the surface of an object. As such, AR/VR point clouds are highly connected (or said to be dense) in the sense that a point is rarely isolated and, instead, has many neighbours.

Dense (or solid) point clouds represent continuous surfaces with a resolution such that cuboid volumes (small cubes) associated with points touch each other without exhibiting any visual hole in the surface.

Such point clouds are typically used in AR/VR environments and are viewed by the end user through a device like a TV, a smartphone or a headset. They are transmitted to the device or usually stored locally. Many AR/VR applications use moving point clouds, as opposed to static point clouds, that vary with time. Therefore, point cloud data is huge and must be compressed.

Nowadays, lossless compression based on an octree representation of the geometry of a point cloud frame (temporal instance of a point cloud) can achieve down to slightly less than a bit per point (1 bpp). This may not be sufficient for real time transmission that may involve several millions of points per point cloud frame with a frame rate as high as 50 frames per second (fps), thus leading to hundreds of megabits of data per second.

Consequently, lossy compression may be used with the usual requirement of maintaining an acceptable visual quality while compressing sufficiently to fit within the bandwidth provided by the transmission channel. In most of applications, real time transmission of the point cloud frames must be ensured, thus imposing complexity and latency constrains on the compression scheme. In many applications, bitrates as low as 0.1 bpp (10x more compressed than lossless coding) would already make possible real time transmission.

V-PCC can achieve such low bitrates by using lossy compression of video codecs that compress 2D frames (pictures) obtained from the projection of parts of the point cloud on a set of planes to obtain projection patches. The geometry of a point cloud frame is represented by these projection patches assembled into a frame, each patch being a small local depth map. However, V-PCC is not versatile and is limited to a narrow type of point clouds that do not exhibit locally complex geometry (like trees, hair) because the obtained projected depth map would not be smooth enough to be efficiently compressed by a video codec like HEVC or VVC.

Purely 3D compression techniques can handle any type of point clouds. It is still an open question whether 3D compression techniques can compete with V-PCC (or any projection + image coding scheme) on dense point clouds. Standardization is still under its way toward offering an extension (an amendment) of the current G-PCC codec to provide competitive lossy compression that would compress dense point clouds as good as V-PCC intra while maintaining the versatility of G-PCC that can handle any type of point clouds (dense, sparse such as Lidar based captured point clouds, 3D maps, etc..).

There are basically three main approaches to obtain a lossy scheme over the octree representation of a point cloud as done by the current G-PCC codec.

A first approach consists in down-sampling the whole point cloud to a smaller resolution, lossless encoding the down-sampled point cloud, decoding the encoded down-sampled point cloud, and then up-sampling the decoded down-sampled point cloud to its original resolution. Many up-sampling schemes have been proposed (like super resolution, artificial intelligence based up-sampling, learning-based 3D post-processing, etc.). The first approach may provide good PSNR (Peak Signal to Noise Ratio) results when the down-sampling is not too aggressive, say no more than a factor 2 in each spatial direction. However, even if this first approach may provide good PSNR results, the visual quality of the up-sampled point cloud is disputable and not well controlled.

A second approach is to let the encoder "adjust" the point cloud locally such that the coding of the octree requires less bitrate. For this purpose, points of the point cloud may be slightly moved such as to obtain occupancy information better predicted by neighboring nodes, thus leading to a lossless encoding of a modified octree with a lowered bitrate. Unfortunately, this approach leads to only small bitrate reduction.

A third approach is based on the so-called TriSoup coding scheme that is under exploration in the standardization working group JTC1/SC29/WG7 of ISO/IEC. The TriSoup coding scheme is the most promising of the three approaches but still requires some work before reaching maturity.

The TriSoup coding scheme provides a local model of the geometry of a point cloud by using a set of triangles without explicitly providing connectivity information, thus its name derived from "soup of triangles".

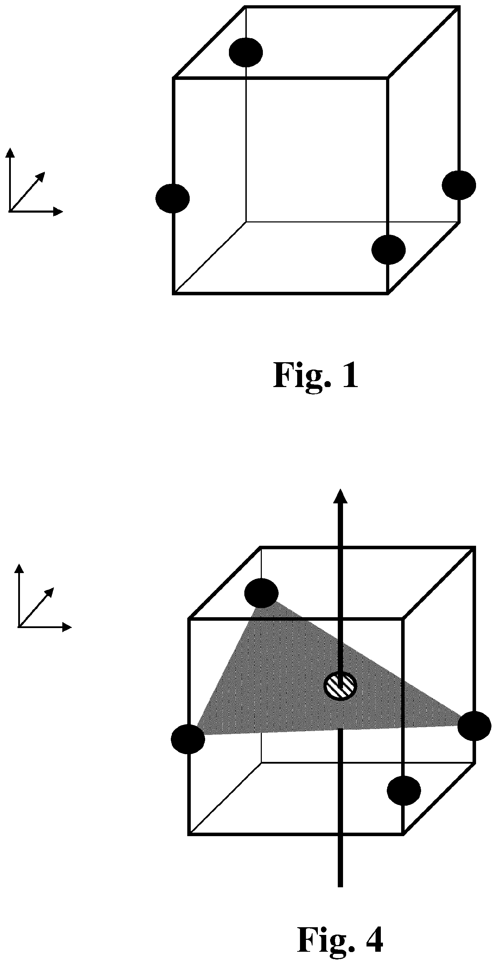

The point cloud geometry is represented in a three-dimensional coordinate system by a 3D tree (usually an octree) down to some resolution, say down NxNxN cuboid volumes (cubes) associated with leaf nodes where N may be 4, 8 or 16 for example. This tree is coded using a lossless coding scheme, like G-PCC for example. The tree itself does not require much bitrate because it does not go down to the deepest depth and has a small number of leaf nodes (cuboid volumes) compared to the number of points of the point cloud. Then, in each NxNxN cuboid volume, the point cloud geometry is modelled by some local model made of a set of triangles. Vertices of triangles are coded along edges of cuboid volumes associated with leaf nodes of the tree, as shown on **Figure 1.** Four vertices (dark black points) along edges of a cube are shown. These four vertices are used to form two triangles as discussed later.

The TriSoup coding scheme is not limited to a particular number of vertices located along edges of a cuboid volume but imposes at most one vertex per edge. The TriSoup coding scheme is not limited to a particular number of triangles in a particular cuboid volume. A vertex is shared among cuboid volumes having in common the edge to which the vertex belongs to. This means that at most one vertex is coded per edge belonging to at least one cuboid volume. By doing so, continuity of the local model is ensured through cuboid volumes associated with the leaf nodes of the tree.

Coding of vertices located on edges of a cuboid volume requires encoding of vertex information per vertex that comprises a vertex flag indicating if a vertex is present on an edge of the cuboid volume and, if present, the vertex position along the edge. A position of the vertex in the three-dimensional coordinate system is then obviously deduced from said vertex position along the edge and the position of the starting and ending vertices of the cuboid volume that define said edge.

The vertex flag may be coded by an adaptive binary arithmetic coder that uses one specific context for coding vertex flags. The vertex position along an edge of length $N=2^s$ may be coded with unitary precision by pushing (bypassing/not entropy coding) s bits into the bitstream.

In summary, coding a point cloud geometry using the TriSoup coding scheme requires coding of octree data (by G-PCC for example) and coding of vertex information. The increase of encoded data due to the encoding of vertex information is more than compensated by the improvement of the reconstruction of the point cloud by triangles as discussed hereafter.

Inside a cuboid volume associated with a leaf node of the tree, at least one triangle is constructed from the vertices if at least three vertices are present on the edges of the cuboid volume. When more than three vertices are present on edges of a cuboid volume, more than one triangle may be constructed.

Multiple construction processes exist to construct such triangles.

In the current TriSoup coding scheme, a triangle is constructed by first determining a dominant direction along one of the three axes of the three-dimensional coordinate system in which the cuboid volume is represented; next, at least three vertices are ordered based on the determined dominant direction; and, finally, at least one triangle is constructed based on a list of at least three ordered vertices.

The dominant direction is determined by testing each of the three directions along the three axes and the one maximizing the total surfaces (seen along the tested direction) of triangles is kept as dominant direction.

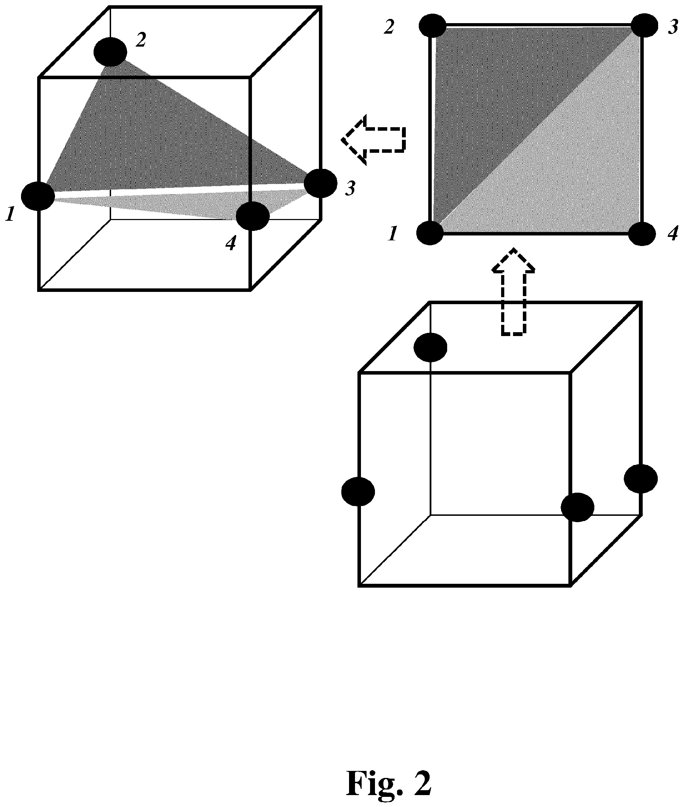

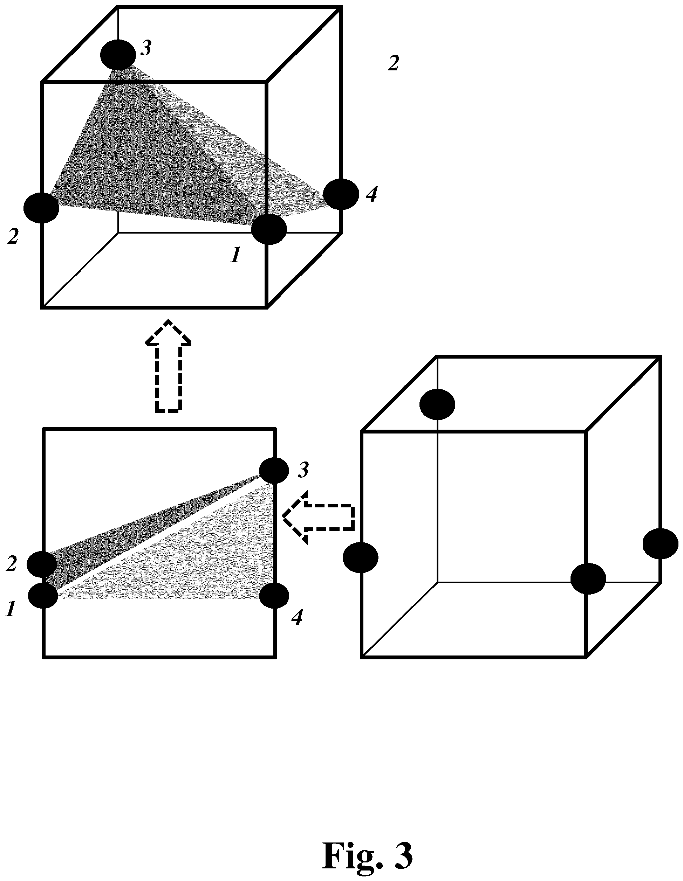

**Figures 2** and **3** show and illustrative example of a process to determine a dominant direction in accordance with current TriSoup.

For simplicity of the figures, only the tests over two axis are depicted on **Figures 2** and **3**.

**Figure 2** shows an illustrative example when the cuboid volume and four vertices (bottom-right) are projected along the vertical axis on a 2D plane (top-right). The four vertices are then ordered following a clockwise order relative to the center of the projected cuboid volume (a square). Then, two triangles are constructed following a fixed rule based on the ordered vertices (top-left). Here, the fixed rule is to construct triangles 123 and 134 when 4 vertices are involved. When 3 vertices are present, the only possible triangle 123 may be constructed. When 5 vertices are present, triangles 123, 134 and 451 may be constructed. And so on, up to 12 vertices. Other fixed rule for constructing triangles from vertices may be used.

**Figure 3** shows an illustrative example when the cuboid volume and four vertices (bottom-right) are projected along the horizontal axis on a 2D plane (bottom-left). The four vertices are then ordered following a clockwise order relative to the center of the projected cuboid volume (a square). Then, two triangles are constructed following the above fixed rule based on the ordered vertices (top-left).

In the examples of **Figures 2** and **3**, the vertical projection (**Figure 2**) exhibits a 2D total projected surface of triangles on the 2D plane that is maximum (greater than the 2D total projected surface of triangles on the 2D plane resulting from the horizontal projection, **Figure 3**). Thus, the dominant direction is selected as vertical, and the two triangles are constructed from the vertices ordered according to the numbering of those vertices resulting of the vertical projection.

The selection of the dominant direction by maximizing the 2D total projected surface of triangles on the 2D plane leads to a continuous reconstruction of the point cloud without holes.

In the current TriSoup coding scheme, a ray tracing process is performed on each cuboid volume of the tree to render the triangles defined inside each cuboid volume into rendered points representing (modeling) points of the point cloud encompassed in said cuboid volume. The positions of all rendered points by ray tracing will make positions of decoded points of the point cloud. This process is called "voxelization" of the triangles.

Basically, ray racing performed on a triangle of a cuboid volume consists in launching rays along the three directions parallel to axes of the three-dimensional coordinate system as shown on **Figure 4.** Origins of the launched rays are points of integer (voxelized) coordinates of precision corresponding to a sampling precision wanted for the rendering. The intersection (if any, dashed point) of a ray with a triangle is then voxelized (= rounded to the closest point at the wanted sampling precision) and added to the list of rendered points.

After applying the TriSoup coding scheme to the cuboid volumes associated with all the leaf nodes of a tree representing a point cloud geometry, i.e. constructing triangles for each of the cuboid volume and obtaining rendered points by ray tracing, copies of same rendered points in the list of all rendered points are discarded (i.e. only one voxel (rendered point) is kept among all voxels sharing a same three-dimensional position) to obtain a set of decoded (unique) points of the point cloud.

The construction of triangles following a fixed rule based on the ordered vertices may lead to visually awkward results when more than 4 vertices are involved. Actually, other triangles may be constructed for a given set of vertices which are different from the triangles constructed by the above fixed rule leading to different sets of rendered points (different visual aspects of the decoded points of the point cloud). Also, it turns out that reconstructing triangles based on the above fixed rule is not optimal in terms of PSNR (Peak Signal to Noise Ratio) results.

The problem is to improve the current TriSoup coding scheme to provide better and more stable visual aspect of a decoded point cloud and to improve the objective metrics (PSNR).

At least one exemplary embodiment of the present application has been devised with the foregoing in mind.

SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of encoding, into a bitstream, positions of points of a point cloud encompassed in a cuboid volume, said positions being represented in a three-dimensional coordinate system, at least two vertices being located on edges of the cuboid volume. The method comprises encoding vertex information defining the at least two vertices into the bitstream; determining a point in the cuboid volume from the at least two vertices; and constructing at least one triangle from the at least two vertices and the determined point; positions of rendered points obtained by voxelization of the at least one triangle representing the positions of the points of the point cloud encompassed in the cuboid volume.

According to a second aspect of the present application, there is provided a method of decoding, from a bitstream, positions of points of a point cloud encompassed in a cuboid volume, said positions being represented in a three-dimensional coordinate system. The method comprises: decoding, from the bitstream, vertex information defining at least two vertices located on edges of the cuboid volume; determining a point in the cuboid volume from the at least two vertices; and constructing at least one triangle from the at least two vertices and the determined point; positions of rendered points obtained by voxelization of the at least one triangle representing the positions of the points of the point cloud encompassed in the cuboid volume.

In one exemplary embodiment, the determined point is a centroid point defined from a mean value of the at least two vertices.

In one exemplary embodiment, the point is determined by adding a residual position to a centroid point defined from a mean value of the at least two vertices.

In one exemplary embodiment, the residual position is signaled in the bitstream.

In one exemplary embodiment, the residual position is a one-dimensional residual position defined along a line defined from the centroid point and a normal vector.

In one exemplary embodiment, the normal vector is taken parallel to an axis of the three-dimension coordinate system.

In one exemplary embodiment, the normal vector is defined as a sum of cross products of vectors, each vector being defined from an ordered vertex and the centroid point.

In one exemplary embodiment, the one-dimensional residual position is a product of the normal vector by a scalar value.

In one exemplary embodiment, the scalar value is determined from distances of the points of the point cloud encompassed in the cuboid volume with the centroid point.

In one exemplary embodiment, the scalar value is signalled in the bitstream.

According to a third aspect of the present application, there is provided a bitstream formatted to include encoded point cloud geometry video data obtained from a method according to the first aspect of the present application.

According to a fourth aspect of the present application, there is provided an apparatus comprising means for performing one of the methods according to the first or second aspect of the present application.

According to a fifth aspect of the present application, there is provided a computer program product including instructions which, when the program is executed by one or more processors, causes the one or more processors to carry out a method according to the first or second aspect of the present application.

According to a sixth aspect of the present application, there is provided a non-transitory storage medium carrying instructions of program code for executing a method according to the first or second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows schematically a TriSoup cuboid volume comprising four vertices;

**Figure 2** shows an illustrative example of a process to determine a dominant direction in accordance with current TriSoup;

**Figure 3** shows an illustrative an example of a process to determine a dominant direction in accordance with current Trisoup;

**Figure 4** shows schematically an example of ray tracing for rendering a point of the point cloud in accordance with one exemplary embodiment;

**Figure 5** shows a schematic block diagram of a method 100 of encoding, into a bitstream, positions of points of a point cloud encompassed in a cuboid volume, in accordance with at least one exemplary embodiment;

**Figure 6** shows a schematic block diagram of a method 200 of decoding, from the bitstream B, positions of points of a point cloud encompassed in a cuboid volume, in accordance with at least one exemplary embodiment;

**Figure 7** shows schematically an example of triangles construction from four vertices and the centroid point in accordance with one exemplary embodiment;

**Figure 8** shows an example of a residual value along a line defined from the centroid point and a normal vector;

**Figure 9** illustrates a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to point cloud encoding and decoding, one other aspect generally relates to transmitting a bitstream generated or encoded and one other aspects relates to receiving/accessing a decoded bitstream.

Moreover, the present aspects are not limited to MPEG standards such as MPEG-I part 5 or part 9 that relate to the Point Cloud Compression, and may be applied, for example, to other standards and recommendations, whether pre-existing or future-developed, and extensions of any such standards and recommendations (including MPEG-I part 5 and part 9). Unless indicated otherwise, or technically precluded, the aspects described in the present application may be used individually or in combination.

In brief, the present invention provides an improvement of the construction of triangles of the Trisoup coding scheme by determining a point in the cuboid volume from all the ordered vertices; and by reconstructing the triangles from two consecutive ordered vertices and the determined point.

Such a construction of triangles preserves natural symmetries of the local model without privileging arbitrary some triangles as done in the prior art (fixed rule over ordered vertices used in the triangle construction). Moreover, the present invention provides an additional degree of freedom to improve the accuracy of the local model, namely the position of the point C leading to an improvement of both the visual aspect of the rendered point cloud and the objective metrics (PSNR).

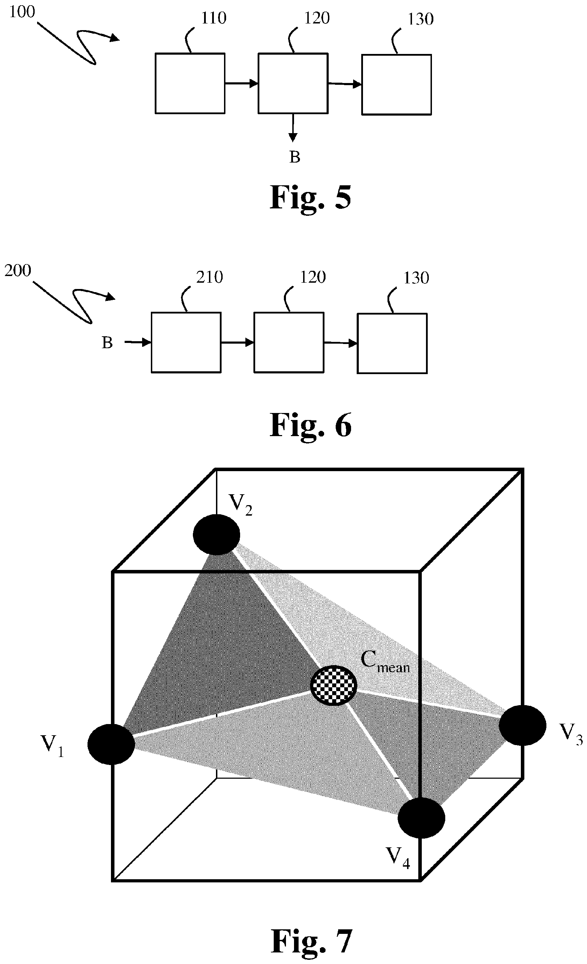

**Figure 5** shows a schematic block diagram of a method 100 of encoding, into a bitstream B, positions of points of a point cloud encompassed in a cuboid volume, in accordance with at least one exemplary embodiment.

**Figure 5** describes the encoding of positions of points of a point cloud encompassed in a cuboid volume. Obviously, this method may apply to all the cuboid volumes that represent a whole point cloud geometry.

The positions of the points of the point cloud encompassed in the cuboid volume are represented in a three-dimensional coordinate system. At least two vertices are located along edges of the cuboid volume.

In step 110, vertex information defining the at least two vertices is encoded into the bitstream B.

Vertex information for a vertex comprises a vertex flag indicating if the vertex is present on an edge of the cuboid volume and, if present, the position of the vertex position along the edge.

In step 120, a point C is determined in the cuboid volume from the at least two vertices.

In step 130, at least one triangle is constructed from the at least three vertices and the determined point C.

In one exemplary embodiment of step 130, a dominant direction may be determined along one of the three axes of the three-dimensional coordinate system as discussed above. The at least two vertices may be ordered based on said dominant direction and the at least one triangle may be constructed based of the at least two ordered vertices and the determined point C.

Constructing triangles in method 100 leads to positions of rendered points obtained by voxelization of the constructed triangles as discussed above. Those positions represent positions of points of the point cloud encompassed in the cuboid volume. Those positions may be used, for example, for encoding attributes of points of the point cloud encompassed in the cuboid volume.

**Figure 6** shows a schematic block diagram of a method 200 of decoding, from the bitstream B, positions of points of a point cloud encompassed in a cuboid volume, in accordance with at least one exemplary embodiment.

In step 210, vertex information is decoded from the bitstream B. The vertex information defines at least two vertices located on edges of the cuboid volume.

In step 120, a point C is determined in the cuboid volume from the at least two vertices.

In step 130, at least one triangle may be constructed from the at least three vertices and the determined point C.

Constructing triangles in method 200 leads to positions of rendered points obtained by voxelization of the constructed triangles as discussed above. Those positions represent positions of points of the point cloud encompassed in the cuboid volume. Those positions may be used, for example, for encoding attributes of points of the point cloud encompassed in the cuboid volume.

In one exemplary embodiment of step 120, the point C is a centroid point $C_{mean}$ defined from a mean value of the at least two vertices. More precisely, the coordinates of the centroid point $C_{mean}$ in the three-dimensional coordinate system equal a mean value of coordinates of the at least two vertices.

**Figure 7** shows schematically an example of triangles construction from four ordered vertices $V_i$ ($i$ = 1, ...,4) and the centroid point $C_{mean}$.

Four triangles are constructed in this shown example from the four ordered vertices $V_i$ ($i$ = 1, ...,4) by pivoting around the centroid point $C_{mean}$. The four constructed triangles are ($V_1V_2 C_{mean}$), ($V_2V_3 C_{mean}$), ($V_3V_4 C_{mean}$), and ($V_4V_1 C_{mean}$). More generally, M triangles are constructed from M ordered vertices $V_i$ ($i$ = 1, ...,M).

In one exemplary embodiment, the point C is determined by adding a residual position $C_{res}$ to the centroid point $C_{mean}$:

$$C=C_{mean}+C_{res}$$

In a variant, the residual position $C_{res}$ is signaled in the bitstream B, i.e. encoded into the bitstream B in method 100 and decoded from the bitstream B in method 200.

The residual position may be a 3D residual position. However, it has been observed that a 3D residual position is rarely advantageous because it requires many bits to be encoded and this many bits are not fully compensated by the better accuracy of the local model (representation of the positions of the point cloud encompassing the cuboid volume).

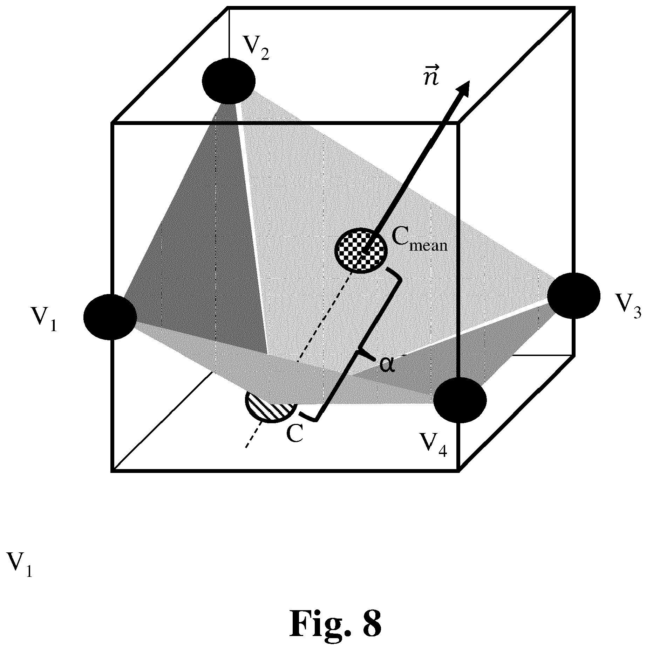

In one exemplary embodiment, shown on **Figure 8**, the residual position $C_{res}$ is a one-dimensional residual position defined along a line defined from the centroid point $C_{mean}$ and a normal vector $\vec{n}$:

$$C_{res} = \alpha * \vec{n}$$

where $\alpha$ is a signed scalar value, named residual value, and $\vec{n}$ is a normal vector defined from the Trisoup vertices and the centroid point $C_{mean}$.

In one exemplary embodiment, the normal vector $\vec{n}$ may be defined by calculating a vector $\vec{m}$ as a sum of cross products (also named vector product $\vec{E_m} \times \vec{E_n}$ between two vectors $\vec{E_m}$ and $\vec{E_n}$) as follows

$$\vec{m} = \vec{E_1} \times \vec{E_2} + \ldots + \vec{E_{M-1}} \times \vec{E_M} + \vec{E_M} \times \vec{E_1}$$

where each vector $\vec{E_j}$ is defined by:

$$\vec{E_J} = \overrightarrow{V_J C_{mean}}$$

and by normalizing the vector $\vec{m}$:

$$\vec{n} = \vec{m} / \sqrt{\|\vec{m}\|}$$

In a variant, the normal vector $\vec{n}$ may be taken parallel to an axis of the three-dimension coordinate system in order to simplify computation of its determination and the residual value $\alpha$.

In a variant, the normal vector $\vec{n}$ may be taken parallel to the dominant direction defined above.

Such a normal vector is a good approximation of the normal vector computed above.

The residual value $\alpha$ and thus the residual position $C_{res}$ is determined such that the adjusted position of the point C is closer from original points of the point cloud encompassed in the cuboid volume.

In one exemplary embodiment, the residual value $\alpha$ may be determined in method 100 by considering all points $P_k$ of the point cloud belonging to the cuboid volume. For each point $P_k$, its distance $d_k$ from the line ($C_{mean}$, $\vec{n}$) is found by:

$$d_k = \left\| \vec{n} \times \overrightarrow{C_{mean}P_k} \right\|,$$

and in case this distance $d_k$ is below some threshold $th$ (say $th$ =2), the points $P_k$ is used to compute the value $\alpha$. A 1D residual $r_k$ of a point $P_k$ relative to the centroid point $C_{mean}$ is obtained by the scalar product (also named inner product or dot product)

$$r_k = \vec{n}.\overrightarrow{C_{mean}P_k}$$

The residual value $\alpha$ is thus obtained by

$$\alpha = \sum_{P_k \in S} r_k \ / \ |S|$$

where S is the set of points $P_k$ such that their distance $d_k$ is below the threshold *th,* and $|S|$ is the number of points belonging to this set.

In variant, the residual value $\alpha$ may be signalled in the bitstream B, i.e. encoded into the bitstream B in method 100 and decoded from the bitstream B in method 200.

In one exemplary embodiment, the residual value $\alpha$ may be binarized and each bit may be encoded by using a binary entropy coder such as an arithmetic coder or a context adaptive binary coder like CABAC.

In a variant, the residual value $\alpha$ may be binarized into a flag $f_0$ indicating if $\alpha$ is equal to 0, a sign that indicates if $\alpha>0$ or $\alpha<0$, a flag fi indicating if $|\alpha|$ is equal to 1, and a remainder $|\alpha|$-2 coded by an expGolomb coder.

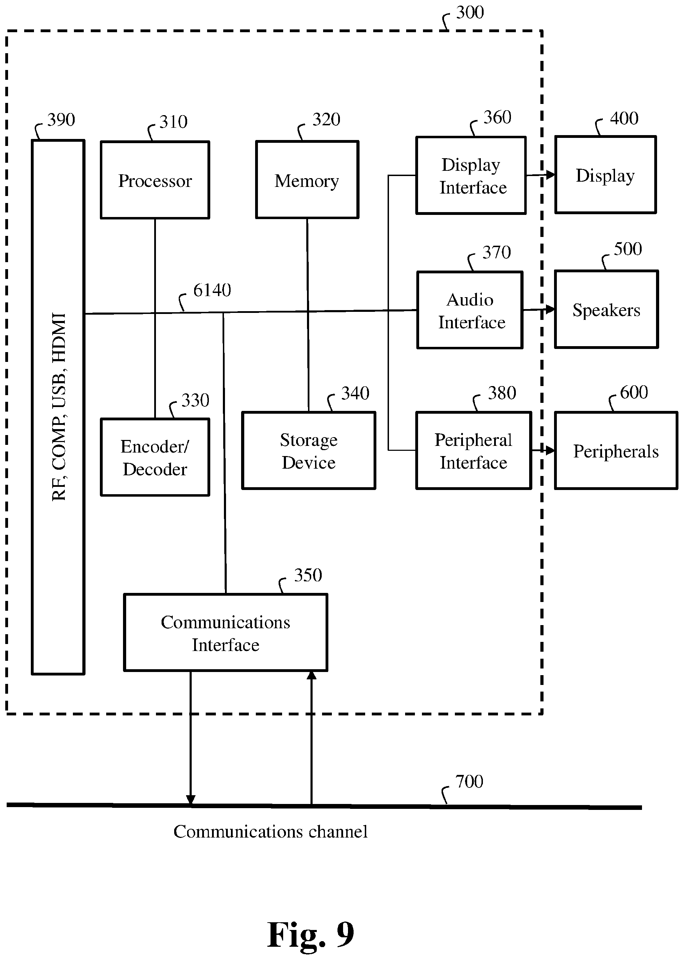

**Figure 9** shows a schematic block diagram illustrating an example of a system in which various aspects and exemplary embodiments are implemented.

System 300 may be embedded as one or more devices including the various components described below. In various embodiments, the system 300 may be configured to implement one or more of the aspects described in the present application.

Examples of equipment that may form all or part of the system 300 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. Elements of system 300, singly or in combination, may be embodied in a single integrated circuit (IC), multiple ICs, and/or discrete components. For example, in at least one embodiment, the processing and encoder/decoder elements of system 300 may be distributed across multiple ICs and/or discrete components. In various embodiments, the system 300 may be communicatively coupled to other similar systems, or to other electronic devices, via, for example, a communications bus or through dedicated input and/or output ports.

The system 300 may include at least one processor 310 configured to execute instructions loaded therein for implementing, for example, the various aspects described in the present application. Processor 310 may include embedded memory, input output interface, and various other circuitries as known in the art. The system 300 may include at least one memory 320 (for example a volatile memory device and/or a non-volatile memory device). System 300 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples.

The system 300 may include an encoder/decoder module 330 configured, for example, to process data to provide encoded/decoded point cloud geometry data, and the encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in the present application may be stored in storage device 340 and subsequently loaded onto memory 320 for execution by processor 310. In accordance with various embodiments, one or more of processor 310, memory 320, storage device 340, and encoder/decoder module 330 may store one or more of various items during the performance of the processes described in the present application. Such stored items may include, but are not limited to, a point cloud frame, encoded/decoded geometry/attributes videos/images or portions of the encoded/decoded geometry/attribute video/images, a bitstream, matrices, variables, and intermediate or final results from the processing of equations, formulas, operations, and operational logic.

In several embodiments, memory inside of the processor 310 and/or the encoder/decoder module 330 may be used to store instructions and to provide working memory for processing that may be performed during encoding or decoding.

In other embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), HEVC (High Efficiency Video coding), VVC (Versatile Video Coding), or MPEG-I part 5 or part 9.

The input to the elements of system 300 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, and/or (iv) an HDMI input terminal.

In various embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 300 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 300 may include communication interface 350 that enables communication with other devices via communication channel 700. The communication interface 350 may include, but is not limited to, a transceiver configured to transmit and to receive data over communication channel 700. The communication interface 350 may include, but is not limited to, a modem or network card and the communication channel 700 may be implemented, for example, within a wired and/or a wireless medium.

Data may be streamed to the system 300, in various embodiments, using a Wi-Fi network such as IEEE 802.11. The Wi-Fi signal of these embodiments may be received over the communications channel 700 and the communications interface 350 which are adapted for Wi-Fi communications. The communications channel 700 of these embodiments may be typically connected to an access point or router that provides access to outside networks including the Internet for allowing streaming applications and other over-the-top communications.

Other embodiments may provide streamed data to the system 300 using a set-top box that delivers the data over the HDMI connection of the input block 390.

Still other embodiments may provide streamed data to the system 300 using the RF connection of the input block 390.

The streamed data may be used as a way for signaling information used by the system 300. The signaling information may comprise the bitstream B and/or information such a number of points of a point cloud, coordinates and/or sensor setup parameters.

It is to be appreciated that signaling may be accomplished in a variety of ways. For example, one or more syntax elements, flags, and so forth may be used to signal information to a corresponding decoder in various embodiments.

The system 300 may provide an output signal to various output devices, including a display 400, speakers 500, and other peripheral devices 600. The other peripheral devices 600 may include, in various examples of embodiments, one or more of a stand-alone DVR, a disk player, a stereo system, a lighting system, and other devices that provide a function based on the output of the system 300.

In various embodiments, control signals may be communicated between the system 300 and the display 400, speakers 500, or other peripheral devices 600 using signaling such as AV.Link (Audio/Video Link), CEC (Consumer Electronics Control), or other communications protocols that enable device-to-device control with or without user intervention.

The output devices may be communicatively coupled to system 300 via dedicated connections through respective interfaces 360, 370, and 380.

Alternatively, the output devices may be connected to system 300 using the communications channel 700 via the communications interface 350. The display 400 and speakers 500 may be integrated in a single unit with the other components of system 300 in an electronic device such as, for example, a television.

In various embodiments, the display interface 360 may include a display driver, such as, for example, a timing controller (T Con) chip.

The display 400 and speaker 500 may alternatively be separate from one or more of the other components, for example, if the RF portion of input 390 is part of a separate set-top box. In various embodiments in which the display 400 and speakers 500 may be external components, the output signal may be provided via dedicated output connections, including, for example, HDMI ports, USB ports, or COMP outputs.

In **Figures 1-9**, various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. As should be clear, the equipment may be mobile and even installed in a mobile vehicle.

Computer software may be implemented by the processor 310 or by hardware, or by a combination of hardware and software. As a non-limiting example, the embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received point cloud frame (including possibly a received bitstream which encodes one or more point cloud frames) in order to produce a final output suitable for display or for further processing in the reconstructed point cloud domain. In various embodiments, such processes include one or more of the processes typically performed by a decoder. In various embodiments, such processes also, or alternatively, include processes performed by a decoder of various implementations described in this application, for example,

As further examples, in one embodiment "decoding" may refer only to de-quantizing, in one embodiment "decoding" may refer to entropy decoding, in another embodiment "decoding" may refer only to differential decoding, and in another embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input point cloud frame in order to produce an encoded bitstream. In various embodiments, such processes include one or more of the processes typically performed by an encoder. In various embodiments, such processes also, or alternatively, include processes performed by an encoder of various implementations described in this application.

As further examples, in one embodiment "encoding" may refer only to quantizing, in one embodiment "encoding" may refer only to entropy encoding, in another embodiment "encoding" may refer only to differential encoding, and in another embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, this application may refer to "obtaining" various pieces of information. Obtaining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a particular information such a number of points of the point cloud or coordinates or sensor setup parameters. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding, into a bitstream, positions of points of a point cloud encompassed in a cuboid volume, said positions being represented in a three-dimensional coordinate system, at least two vertices being located on edges of the cuboid volume, the method comprising:

   - encoding (110) vertex information defining the at least two vertices into the bitstream;
   - determining (120) a point (C) in the cuboid volume from the at least two vertices; and
   - constructing at least one triangle (130) from the at least two vertices and the determined point (C);
   - positions of rendered points obtained by voxelization of the at least one triangle representing the positions of the points of the point cloud encompassed in the cuboid volume.

2. A method of decoding, from a bitstream, positions of points of a point cloud encompassed in a cuboid volume, said positions being represented in a three-dimensional coordinate system, the method comprising:

   - decoding (210), from the bitstream, vertex information defining at least two vertices located on edges of the cuboid volume;
   - determining (120) a point (C) in the cuboid volume from the at least two vertices; and
   - constructing (130) at least one triangle from the at least two vertices and the determined point (C);
   - positions of rendered points obtained by voxelization of the at least one triangle representing the positions of the points of the point cloud encompassed in the cuboid volume.

3. The method of claim 1 or 2, wherein the determined point is a centroid point ($C_{mean}$) defined from a mean value of the at least two vertices.

4. The method of claim 1 or 2, wherein the point is determined by adding a residual position ($C_{res}$) to a centroid point ($C_{mean}$) defined from a mean value of the at least two vertices.

5. The method of claim 4, wherein the residual position ($C_{res}$) is signaled in the bitstream.

6. The method of one of claims 4 to 5, wherein the residual position ($C_{res}$) is a one-dimensional residual position ($\alpha$) defined along a line defined from the centroid point ($C_{mean}$) and a normal vector ($\vec{n}$).

7. The method of claim 6, wherein the normal vector ($\vec{n}$) is taken parallel to an axis of the three-dimension coordinate system.

8. The method of claim 6, wherein the normal vector ($\vec{n}$) is defined as a sum of cross products of vectors, each vector being defined from an ordered vertex and the centroid point (Cmean).

9. The method of one of claims 6 to 8, wherein the one-dimensional residual position ($C_{res}$) is a product of the normal vector ($\vec{n}$) by a scalar value ($\alpha$).

10. The method of claim 9 when claim 4 depends on claim 1, wherein the scalar value ($\alpha$) is determined from distances of the points of the point cloud encompassed in the cuboid volume with the centroid point($C_{mean}$).

11. The method of one of claims 9 or 10, wherein the scalar value ($\alpha$) is signalled in the bitstream.

12. A bitstream, formatted to include encoded point cloud geometry video data obtained from a method of one of claims 1, 3 to 9 or 11.

**13.** An apparatus comprising means for performing one of the method claimed in any one of claims 1 to 11.

**14.** A computer program product including instructions which, when the program is executed by one or more processors, causes the one or more processors to carry out a method claimed in any one of claims 1 to 11.

**15.** A non-transitory storage medium carrying instructions of program code for executing a method claimed in any one of claims 1 to 11.

**Fig. 1**

**Fig. 4**

Fig. 2

Fig. 3

**Fig. 5**

**Fig. 6**

**Fig. 7**

**Fig. 8**

**Fig. 9**

## EUROPEAN SEARCH REPORT

Europäisches
Patentamt
European
Patent Office
Office européen
des brevets

**Application Number**

EP 22 30 5366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Unno Kyohei ET AL: "m58776 Refinement of Trisoup variable node size extension for improving subjective quality", , 20 January 2022 (2022-01-20), pages 1-12, XP055960577, WG 07 MPEG 3D Graphics Coding and Haptics Coding Retrieved from the Internet: URL:https://dms.mpeg.expert/doc_end_user/d ocuments/137_OnLine/wg11/m58776-v3-m58776-v3.zip [retrieved on 2022-09-13] | 1-3, 12-15 | INV. G06T9/00 H04N19/597 |
| A | * pages 3,4,7,10 * ----- | 4-11 | |
| A | DRICOT ANTOINE ET AL: "Adaptive Multi-level Triangle Soup for Geometry-based Point Cloud Coding", 2019 IEEE 21ST INTERNATIONAL WORKSHOP ON MULTIMEDIA SIGNAL PROCESSING (MMSP), IEEE, 27 September 2019 (2019-09-27), pages 1-6, XP033660072, DOI: 10.1109/MMSP.2019.8901791 [retrieved on 2019-11-14] * sections II.B and III.A-III.B with figure 2 * ----- -/-- | 1-15 | |

| | | | TECHNICAL FIELDS SEARCHED (IPC) |
|---|---|---|---|
| | | | G06T H04N |

The present search report has been drawn up for all claims

| Place of search | Date of completion of the search | Examiner |
|---|---|---|
| Berlin | 13 September 2022 | Heising, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches Patentamt

European Patent Office

Office européen des brevets

# EUROPEAN SEARCH REPORT

Application Number

EP 22 30 5366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KHALED MAMMON ET AL: "G-PCC codec description", 125. MPEG MEETING; 20190114 – 20190118; MARRAKECH; (MOTION PICTURE EXPERT GROUP OR ISO/IEC JTC1/SC29/WG11), , no. N18189 22 February 2019 (2019-02-22), pages 1-39, XP030212734, Retrieved from the Internet: URL:http://phenix.int-evry.fr/mpeg/doc_end _user/documents/125_Marrakech/wg11/w18189. zip w18189.docx [retrieved on 2019-02-22] * section 3.3-3.3.4 * ----- | 1-15 | |
| T | LASSERRE (XIAOMI) S: "[GPCC][TriSoup] Part 3 Adding a residual for the centroid vertex", 138. MPEG MEETING; 20220425 – 20220429; ONLINE; (MOTION PICTURE EXPERT GROUP OR ISO/IEC JTC1/SC29/WG11), , no. m59290 12 April 2022 (2022-04-12), XP030301446, Retrieved from the Internet: URL:https://dms.mpeg.expert/doc_end_user/d ocuments/138_OnLine/wg11/m59290-v1-m59290% 5BGPCC%5D%5BTriSoup%5DPart3Addingaresidual forthecentroidvertex.zip m59290 [GPCC][TriSoup] Part 3 Adding a residual for the centroid vertex.pptx [retrieved on 2022-04-12] * the whole document * ----- -/-- | | TECHNICAL FIELDS SEARCHED (IPC) |

The present search report has been drawn up for all claims

| Place of search | Date of completion of the search | Examiner |
|---|---|---|
| Berlin | 13 September 2022 | Heising, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 30 5366**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | "EE 13.50 on triangle soup", 138. MPEG MEETING; 20220425 – 20220429; ONLINE; (MOTION PICTURE EXPERT GROUP OR ISO/IEC JTC1/SC29/WG11), , no. n21576 26 May 2022 (2022-05-26), XP030302492, Retrieved from the Internet: URL:https://dms.mpeg.expert/doc_end_user/d ocuments/138_OnLine/wg11/MDS21576_WG07_N00 331.zip MDS21576_WG07_N0331.docx [retrieved on 2022-05-26] * the whole document * ----- | | |

**TECHNICAL FIELDS SEARCHED (IPC)**

The present search report has been drawn up for all claims

| Place of search | Date of completion of the search | Examiner |
|---|---|---|
| Berlin | 13 September 2022 | Heising, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 3 of 3